# EUROPEAN PATENT SPECIFICATION

(11) **EP 4 029 216 B1**
(45) Date of publication and mention of the grant of the patent: **12.03.2025**
(21) Application number: 20772144.0
(22) Date of filing: 20.08.2020
(51) Int. Cl.: H04L 9/40, H04L 67/1001, H04L 45/00

(54) **SCALABLE DDOS SCRUBBING ARCHITECTURE IN A TELECOMMUNICATIONS NETWORK**
SKALIERBARE DDOS-SCRUBBING-ARCHITEKTUR IN EINEM TELEKOMMUNIKATIONSNETZ
ARCHITECTURE ÉCHELONNABLE DE NETTOYAGE DE DDOS DANS UN RÉSEAU DE TÉLÉCOMMUNICATIONS

(30) Priority: 13.09.2019 US 201962900357 P; 18.06.2020 US 202016905399
(43) Date of publication of application: 20.07.2022
(73) Proprietor: Level 3 Communications, LLC, Broomfield, CO 80021 (US)
(72) Inventor: SMITH, Brent W., Broomfield, Colorado 80021 (US)
(74) Representative: Marks & Clerk LLP
(86) International application number: PCT/US2020/047128
(87) International publication number: WO 2021/050230

(56) References cited:
- US-A1- 2018 302 436
- SHAMELI-SENDI ALIREZA ET AL: "Taxonomy of Distributed Denial of Service mitigation approaches for cloud computing", JOURNAL OF NETWORK AND COMPUTER APPLICATIONS, ACADEMIC PRESS, NEW YORK, NY, US, vol. 58, 9 October 2015 (2015-10-09), pages 165 - 179, XP029340302, ISSN: 1084-8045, DOI: 10.1016/J.JNCA.2015.09.005

## Description

### Technical Field

Embodiments of the present invention generally relate to systems and methods for implementing a telecommunications network, and more specifically for utilizing a tiered architecture of scrubbing devices within the telecommunications network to provide scrubbing services to traffic in response to a distributed denial of service attack.

### Background

Content providers (publishers) now use the Internet (and, particularly, the Web) to provide all kinds of content to numerous users throughout the world. For example, television shows and movies may now be accessed from any number of Web sites, and the shows and movies may be served from Internet devices. Print newspapers have migrated to the Web and provide portals through which clients operating some form of computing device (e.g., PC, smart phone, or tablet), with a browser may access numerous forms of content, such as short video clips, articles, images, and audio tracks. Software updates and patches, once provided on disc and mailed to recipients, are now routinely distributed to devices through one or more network connections and devices.

In some instances, content providers connected to the Internet (such as web data providers) may be attacked by a bad actor attempting to gain access to the provider's network or device or to disrupt the operation of the network or device from providing content to other users of the Internet. One such attack is a denial of service (DOS) attack. DOS attacks attempt to make content servers or other resources of a content provider unavailable to legitimate users by overwhelming the provider's equipment. In general, such attacks include flooding a content server or other type of device providing the content with phony requests for information from the device at such a frequency and volume to impede other legitimate traffic or requests from being fulfilled by the content server. A distributed denial of service (DDOS) attack is similar in aim except that the attack is distributed among many devices (typically associated with unique Internet Protocol (IP) addresses), often unbeknownst to those devices, such that requests for the content are received from the various devices, which can number in the thousands or more. As should be appreciated, such attacks may negatively impact the ability of the customer to provide content to legitimate requesters of content or information, effectively blocking the content from being provided to requesting customers. Similarly, network equipment may temporarily fail under the attack load.

US 2018/302436 describes utilizing routing protocol advertisements within a telecommunications network to dynamically automate the allocation of scrubbing devices in response to a distributed denial of service attack.

It is with these observations in mind, among other, that aspects of the present disclosure were conceived.

### Summary

The invention is defined by the appended independent claims.

Further embodiments are defined by the appended dependent claims.

### Brief Description Of The Drawings

Figure 1 is a schematic diagram illustrating an exemplary network environment operable to provide scrubbing or other network attack defense services to networks or devices connected to an IP network, according to aspects of the present disclosure.
Figure 2 is a schematic diagram illustrating an exemplary network environment for providing scrubbing services to a customer of the network during a network attack in accordance with one embodiment.
Figure 3 is a schematic diagram illustrating an exemplary network environment for providing scrubbing services to traffic during a network attack on one or more components or devices associated with the network in accordance with one embodiment.
Figure 4 is a flowchart illustrating a method for utilizing a multi-tiered scrubbing architecture of a network to provide scrubbing services in response to a potential network attack on a device or network associated with the architecture in accordance with one embodiment.
Figure 5 is a block diagram illustrating an example of a computing system which may be used in implementing embodiments of the present disclosure.

### Detailed Description

Aspects of the present disclosure involve systems, methods, computer program products, and the like, for providing scrubbing techniques via a scrubbing architecture of a network to mitigate a denial of service (DOS) or a distributed DOS (DDOS) attack (collectively referred to herein as a DDOS attack) on a destination device connected to the telecommunications network. In one particular embodiment of the present disclosure, the network provides a scrubbing architecture comprising one or more large scrubber devices configured to scrub communications or packets of a large DDOS attack on a destination device or network and one or more small scrubber devices configured to scrub communications or packets during times of non-DDOS attack on the destination device. The large scrubber devices may include larger bandwidth thresholds to accommodate the large amount of traffic directed to the destination device during the DDOS attack. The small scrubber devices of the architecture may have relatively smaller bandwidth thresholds for a peace-time or normal flow of traffic to the destination device. In this manner, all traffic to the destination device, whether during a DDOS attack or during periods before or after the DDOS attack, may be scrubbed by the scrubbing architecture while improving the efficiency of the scrubbing bandwidth for the network.

In one particular embodiment, the network may include a controller or orchestrator device or system associated with the scrubbing architecture to control which scrubber of the scrubbing architecture is tasked with scrubbing packets, either legitimate or as part of a DDOS attack, intended for a destination device. The controller may receive one or more announced routing protocol advertisements from a network device under a DDOS attack. In some instances, the announcing device may be a small scrubber of the scrubbing architecture. In response to receiving the advertisement or announcement, the controller or orchestrator may determine a scrubbing device of the architecture and configure the determined scrubbing device of the network to begin providing the scrubbing service to packets matching the received routing announcement. In addition, the orchestrator may access a database of customer information and associate the received route announcement with a particular customer. Further, a scrubbing service state for the customer (such as whether a customer profile exists on the scrubbing environment, an active or inactive state of the customer profile on the scrubbing environment, a level and type of scrubbing service provided to the customer by the scrubbing environment, etc.) may be obtained or determined by the orchestrator. With the received route announcement and the customer profile and state information, the orchestrator may provide instructions to configure the scrubbing devices of the network based on the received information, either to a large scrubbing device in response to a large DDOS attack and/or to a small scrubbing device in response to a return to normal traffic levels for the protected destination. In this manner, the orchestrator may dynamically shift scrubbing services from a small scrubber to a large scrubber of the architecture (and vice versa) based on information received from the scrubbers of a potential DDOS attack.

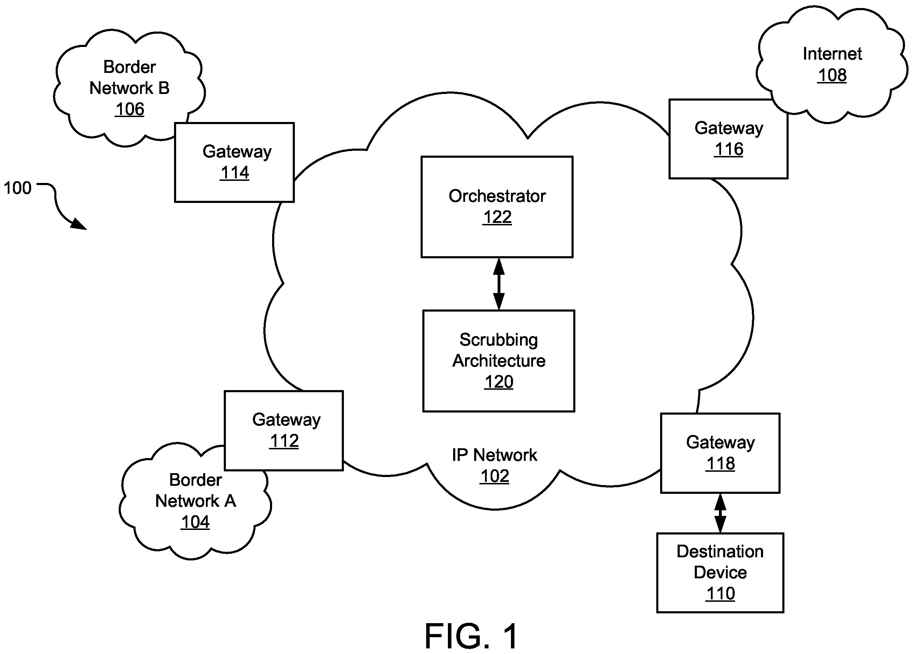

Figure 1 illustrates an exemplary network environment 100 operable to provide scrubbing or other DDOS attack defense services to networks or devices connected to an IP network 102, according to aspects of the present disclosure. In general, the environment 100 includes a telecommunications network 102 (a specific example of which is a "core network") that connects networks and/or customers to provide and receive one or more network services. In particular, one or more border networks (such as border network A 104 and/or border network B 106) may connect to the IP network 102 to provide and receive communications with other users or other networks via the IP network 102. In one particular example, the network 102 may connect the border networks 104,106 to a public network, such as Internet 108. Network devices, such as destination device 110, may also connect to the network 102 to receive communications or packets from the network 102. In some instances, such devices 110 may be included in a border network 104,106. With specific reference to Figure 1, the environment 100 includes an IP network 102, which may be provided by a wholesale network service provider.

To facilitate the transmission of communication packets/data between computing devices, users, networks, etc., the network 102 may include numerous networking devices. Such devices or components may include, but are not limited to gateways, routers, route reflectors, and registrars, which enable communication and/or provide services across the IP network 102. In some instances, the network 102 may include edge devices 112-118 that connect to or otherwise provide an interface between network 102 and other networks 104,106 or devices 110. Edge devices 112-118 (or gateways) may transmit and/or receive communication packets into and out of the network 102. Transmission of received packets through the network 102 may be performed by one or more other network devices connected between the edge devices 112-118. Communication paths or wires may connect the components of the network 102 such that one or more packets may be transmitted between customers or networks via the components of the network 102.

In addition to routing communications between networks 104,106 and/or devices 110, the network 102 may also provide one or more services to networks or devices connected or associated with the core network 102. In one example, the network 102 may provide a scrubbing service or other defensive service against DDOS attacks against a network or device connected to or associated with the network 102. As described in more detail below, a scrubbing service may direct communications or packets identified as a part of a DDOS attack to a scrubbing device before transmission to the destination device 110 or network. In some instances, the scrubbing device may identify those packets that are intended to overwhelm or otherwise harm the destination device 110 or network and remove the offending packets from the stream of traffic to the destination, while allowing legitimate requests or traffic to be transmitted to the destination deice 110 or network. To provide the scrubbing service to networks 104,106 or devices 110 associated with the network 102, the network may include a scrubbing architecture 120 comprising one or more network scrubbing devices. One instance of the scrubbing architecture 120 may include a tiered-structure of large scrubbers with relatively large bandwidth thresholds and small scrubbers with relatively small bandwidth thresholds. An orchestrator 122 may also be included in the network 102 for controlling one or more aspects of the scrubbing architecture 120. Operations and methods executed by the orchestrator 122 are described in more detail below for managing the scrubbing services provided to networks 104,106 and/or devices 110 associated with the network 102.

The network 102 may be configured in any manner to facilitate the routing of communications through the network and to provide one or more services to customers or the network 102. For example, the network 102 may include a series of interconnected networking devices, such as routers and switches, that receive a communication, analyze the communication to determine a destination, and route the communication to a connected networking device to get the communication closer to a destination or egress point (such as gateway 118). To determine which routes through the network to utilize to route a received communication or packet, components of the network may receive route information through one or more route announcing sessions between the devices. These route announcing sessions provide routing information between the components of the network and between different networks so that components of the Internet and other networks may determine how to route received communication packets.

One particular example of the announcement of routing information occurs in a Border Gateway Protocol (BGP) announcement. In general, BGP information (or BGP session, BGP feed or BGP data) is a table of Internet Protocol (IP) prefixes which designate network connectivity between autonomous systems (AS) or separate networks. BGP information for a network route may include path (including next-hop information), network policies, and/or rule-sets for transmission along the path, among other information. The BGP feed may also include Interior Gateway Protocol (IGP) information for network routes within an Autonomous System (AS) or network and/or other network information that pertains to the transmission of content from the network. However, as described below, BGP information mainly describes routes used by the network 102 to connect to external networks or customers (such as border networks 104, 106) while IGP information describes routes through the network to connect one edge device (such as gateway 112) to another edge device (such as gateway 118) through a telecommunications network 102.

One or more of the components of the network 102 may announce through a BGP session or other routing protocol announcement or advertisement routes serviced by that component. For example, gateway 118 may provide a BGP announcement to other components in the network 102 that indicates which networks or devices (such as device 110) that may be accessed through the gateway. Thus, the BGP announcement for gateway 118 may include a path and next-hop information that designates a path along which packets may be transmitted or received from the connected device 110. The next-hop information generally identifies a particular device of the network 102 through which a destination device or address is available. For example, a particular Internet Protocol (IP) address associated with border network 104,106 may be announced from gateway 112 to other components of the network 102. Although discussed herein as BGP announcements or advertisements, it should be appreciated that the routing protocol advertisements may be either or both BGP routes between networks and IGP routes through IP network 102.

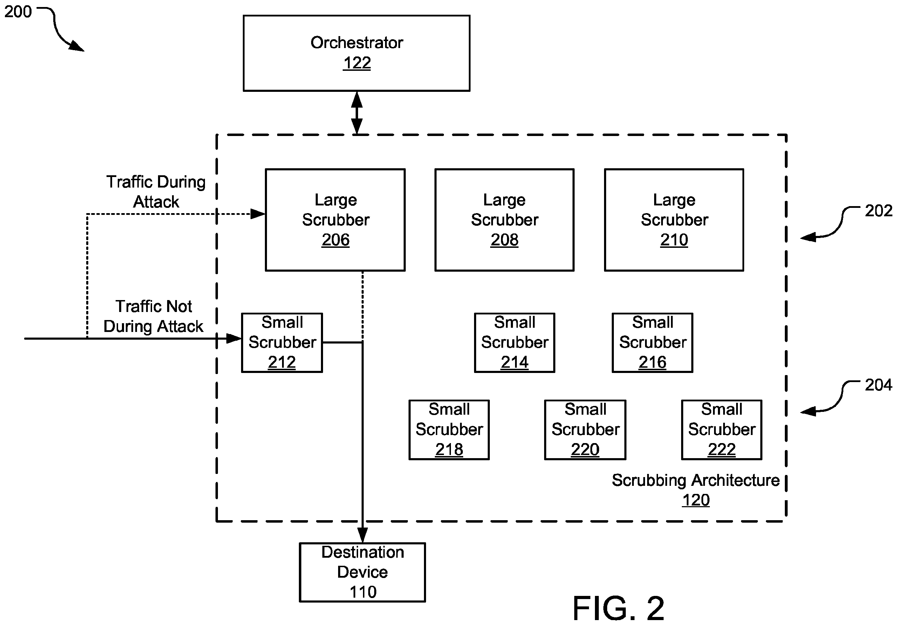

As mentioned above, the scrubbing architecture 120 of the network 102 may include a plurality of tiered scrubbing devices to provide scrubbing services for border networks 104,106 or devices 110 connected to the network 102. Figure 2 is a block diagram 200 illustrating the scrubbing architecture 120 and orchestrator 122 of the network 102 of Figure 1. Although illustrated in Figure 1 as being included in network 102, the orchestrator 122 and/or the scrubbing architecture 120 (or portion of the scrubbing architecture 120) may be separate from the network 102.

The scrubbing architecture 120 illustrated includes two tiers of scrubbing devices; a first tier 202 of large scrubbers 206-210 and a second tier 204 of small scrubbers 212-222. In general, the large scrubbers 206-210 and the small scrubbers 212-222 may provide the same scrubbing service to traffic received at the scrubber. The designations of "large" and "small" may therefore refer to other aspects of the scrubbing devices. For example, a large scrubber 206-210 may be configured with a larger bandwidth of incoming traffic, larger memory, greater computational or processing power, etc. than compared to the small scrubber 212-222, although any scrubber may provide scrubbing services to received traffic. In other examples, the large scrubbers 206-210 may be more costly when compared to small scrubbers 212-222 due to the higher bandwidth capacity of the large scrubber and may, in some instances, may consume a larger footprint in a networking site of the network 102. In general, as used herein, the designation of a large scrubber 206-210 indicates a scrubber device with a larger incoming bandwidth than compared to the small scrubber 212-222.

Although illustrated as two tiers of scrubbing devices, the scrubbing architecture 120 may include any number of tiers of scrubbing devices. Each tier of the scrubbing architecture 120 may include scrubbing devices that differ in some aspect from scrubbers of other tiers in the architecture 120. For example, a first tier may include scrubbers with 600 gigabytes per second (Gbps) of bandwidth, a second tier may include scrubbers with 250 Gbps of bandwidth, and a third tier may include scrubbers with 100 Gbps of bandwidth. Some tiers of the scrubbing architecture 120 may include scrubbers with larger memory space in comparison to other scrubbers of the architecture 120 to store scrubbing profiles (discussed in more detail below), scrubbers with more processing power than other tiers of scrubbing devices, and the like. In still further examples, one or more tiers of the architecture 120 may include scrubbers of various types such that a tier may include scrubbers with large bandwidth and scrubbers with smaller bandwidths. The number of tiers of the architecture 120 and the type of scrubbing devices included in each tier may vary from network to network and may be configured by a network administrator.

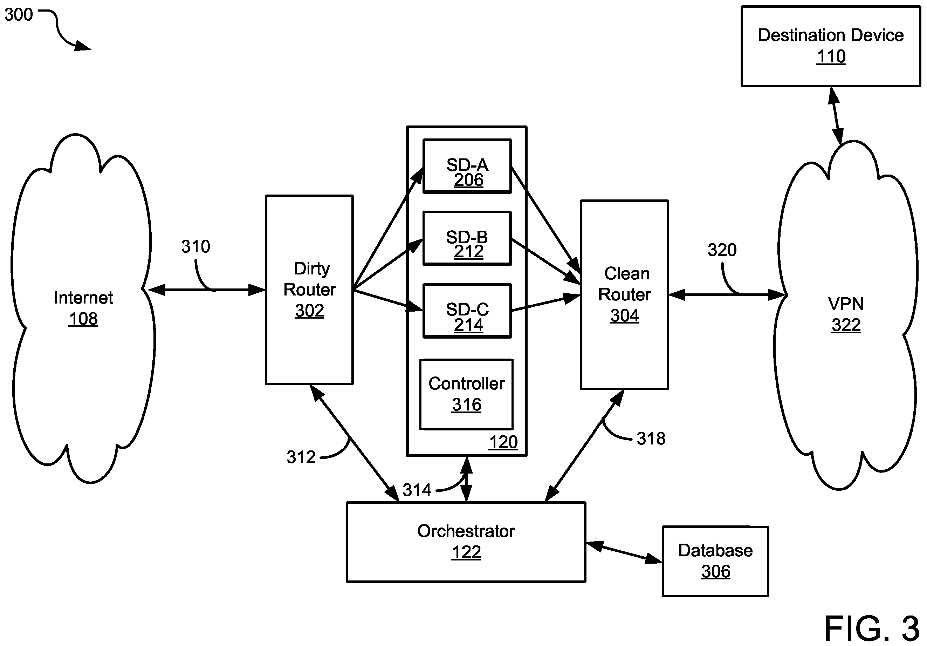

The operation of the scrubbing devices (the large scrubbers 206-210, the small scrubbers 212-222, or any other scrubbing devices with particular capabilities) are described with relation to Figure 3. In particular, Figure 3 provides an exemplary network environment 300 for providing scrubbing services to traffic during a DDOS attack on one or more components or devices associated with the network 102. In general, the components of the network environment 300 may be incorporated or included in the IP network 102 of Figure 1. For example, so-called "dirty" router 302, scrubbing architecture 120, so-called "clean" router 304, and orchestrator 122 may be included in the network 102 as part of a scrubbing or anti-attack service provided by the network 102. Although illustrated in Figure 3, it should be appreciated that more or fewer components than those shown may also be included in the telecommunications network 102. Other components, such as customer device 110 and/or Internet 108 may form a portion of the network 102 or may be included in other communication networks. Regardless of the configuration, the network environment 300 of Figure 3 provides for a scrubbing service to networks or devices associated with the network 102 during a DDOS attack to mitigate the negative effects of the attack on the destination devices 110.

As shown in Figure 3, destination device 110 may connect to the Internet 108 through a scrubbing device, such as small scrubbing device 212. In general, destination device 110 may be any network device, such as an application server or storage server for providing data or any other type of content to requestors through the Internet 108. Further, destination device 110 may be more than one customer network device to create a customer network of such devices for providing Internet data or content to requesting devices. The scrubbing architecture 120 may provide scrubbing services for all traffic intended for the destination device 110. For example, traffic from the Internet 108 intended for the destination device 110 may pass through the scrubbing environment 300 of Figure 3 to remove potentially harmful communications associated with a DDOS attack from reaching the destination device 110. In one instance, an administrator of the destination device 110 or destination network may employ a scrubbing service provided by an IP network 102 to scrub out communication packets intended for the destination device 110 that are identified as malicious or otherwise part of the DDOS attack.

In one particular implementation of the scrubbing service of the network 102, the redirecting of communication packets through the scrubbing architecture 120 may be instigated through a BGP announcement or other routing protocol announcement. In particular, the destination device 110 or network may provide an IP address associated with the device to the network 102 and other connected networks through one or more BGP announcements. Traditionally, BGP announcements are provided by devices or networks to aid networks in creating routing paths to the announcing device. To generate a scrubbing of the traffic for the destination device 110, a Virtual Private Network (VPN) 322 associated with the network 102 may be created from which the BGP announcements for the destination device 110 may be announced. In this manner, the VPN 322 acts as a border network between destination device 110 and the network 102 hosting the scrubbing architecture 120. The routing information announced by the destination device 110 to VPN 322 may propagate through other components of the network 102 through other BGP sessions, such as between VPN 322 to clean router 304, from clean router to scrubbing architecture 120, from scrubbing architecture to dirty router 302, and from dirty router 302 to the Internet 108 public network. This cascading route announcement from destination device 110 through the scrubbing architecture 120 creates a routing path to reach destination device 110 while providing scrubbing services on the traffic intended for the device. Thus, route 310 creates a bypass route for communication packets intended for the destination device 110 that are now routed through the dirty router 302 to begin the scrubbing service of the packets.

Upon routing of traffic intended for the destination device 110 along communication line 310, the dirty router 302 may transmit the communication packets for the destination device 110 to the scrubbing architecture 120 for analysis and scrubbing. In particular, the scrubbing architecture 120, as illustrated in Figure 2, may include one or more large scrubbing devices 206-210, one or more small scrubbing device 212-222, and/or one or more additional scrubbing devices arranged in a tiered manner based on the capabilities of the scrubbing devices, such as input bandwidth. Three scrubbing devices (large scrubber SD-A 206 and small scrubbers SD-B 212 and SD-C 216) are illustrated in the example of Figure 3, although more or fewer scrubbers may be included in the scrubbing architecture 120. In some examples, a scrubbing controller 316 may also be included to control configurations of the scrubbing devices of the architecture 120. In other examples, the activities or operations of the controller 316 may be performed by the orchestrator 122 and/or the scrubbing devices, as described in more detail below.

In general, the scrubbing devices of the architecture 102 analyze communication packets to determine if such packets may be potentially malicious to a destination device, such as by being part of a DDOS attack, and remove or reroute such packets before reaching the destination device 110. As explained in more detail below, the scrubbing controller 316 and/or the orchestrator 122 may control the operation of the scrubbing devices of the architecture 120, such as configuring the scrubbing devices with scrubbing profiles that instructs the scrubbing devices on the scrubbing services to apply to received packets. The incoming stream of communication packets for the destination device 110 that is scrubbed in the scrubbing architecture 120 may then be transmitted to the clean router 304 which provides the cleaned stream of packets to the VPN 322 over connection 320. The VPN 322, in turn, transmits the cleaned stream of packets to the destination device 110 for processing by the device. In this manner, a scrubbing of the communication packets for destination device 110 may be provided through the scrubbing architecture 120 to mitigate a DDOS attack on the destination device.

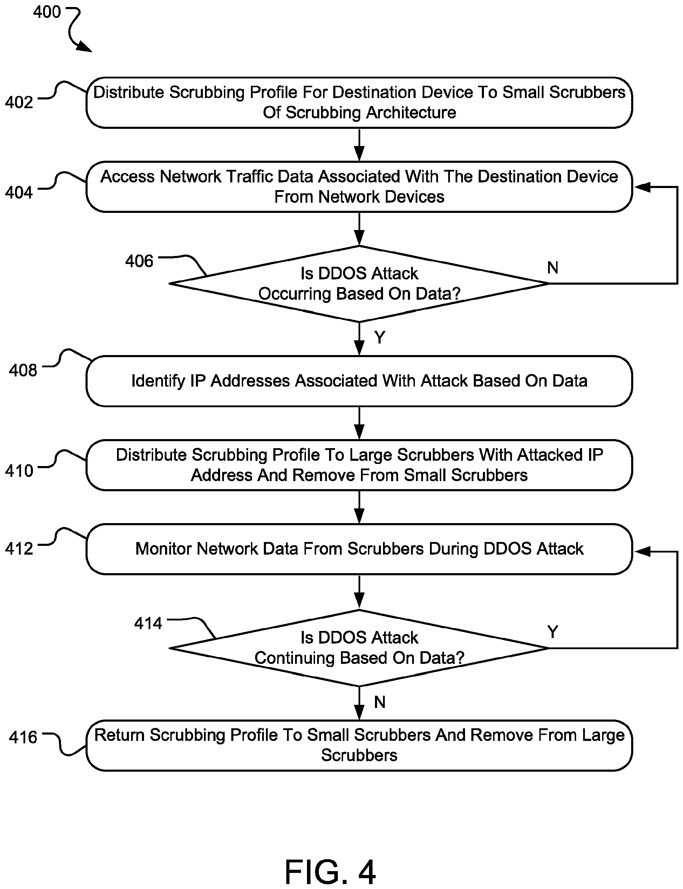

The scrubbing devices of the scrubbing architecture 120 may be provided with or otherwise have access to scrubbing information that includes IP addresses associated with the destination device 110 or network, the type of scrubbing technique to apply to packets with the IP address, and other information that may configure the operation of the scrubbing devices to provide the scrubbing service. This information may be provided to the scrubbing controller 316 and/or scrubbers by the orchestrator 122. In some instances, the orchestrator 122 may receive or access the scrubbing information or profiles from a database 306. Further, in some instances, the orchestrator 122 may be included in the network 102 to automate the provisioning of the scrubbers of the scrubbing architecture 120 or to adjust the configuration of the scrubbing architecture, as described in more detail below with reference to Figure 4. In general, the orchestrator 122 may be any type of computing or networking device, such as an application server. In one implementation, the orchestrator 122 receives one or more route protocol advertisements from network devices (such as the BGP route advertisement of the destination device 110 received at the clean router 304) and configures one or more of the scrubbing devices or scrubbing controller 316 of the scrubbing architecture 120 based on the received route protocol advertisement. This configuration of the scrubbing architecture 210 may occur automatically in response to the received route information such that the scrubbing service may be provided faster and without manual entry of customer information to the scrubbing environment.

To describe the operation and use of the orchestrator 122, reference is now made to the method 400 of Figure 4. Figure 4 is a flowchart illustrating a method 400 for utilizing a multi-tiered scrubbing architecture 120 of a network 102 to provide scrubbing services in response to a potential DDOS attack on a device or network associated with the architecture. In general, the operations of the method 400 may be performed by the orchestrator 122 device discussed above. However, one or more of the operations may be performed by other networking or computing devices, such as a scrubbing device or scrubbing controller. Further, the orchestrator 122 may include more than one device for executing the operations of the method 400. Through the method 400, the orchestrator 122 may configure one or more aspects of the scrubbing architecture 120 to respond to a detected DDOS attack and provide scrubbing services for traffic affected by the attack.

Beginning in operation 402, the orchestrator 122 may distribute a scrubbing profile associated with the destination device 110 requesting the scrubbing services to one or more small scrubbers 212-222 of the scrubbing architecture 120. As mentioned above, the scrubbing profile may include an identification of one or more IP addresses or a range of IP addresses for which a scrubbing service is to be applied. The profile may include additional information, such as the level of scrubbing, thresholds and rules for detecting a harmful communication packet, actions to take upon detecting a harmful communication packet, a customer identifier associated with the IP addresses for scrubbing, and the like. In some instances, the orchestrator 122 may obtain the profile from a database 306 in communication with the orchestrator and may retain some aspects of the profile while providing other aspects of the profile to the one or more small scrubber 212-222.

Using the environment 200 of Figure 2 as an example, the orchestrator 122 may provide the profile to one or more of the small scrubbers 212-222 of the scrubbing architecture 120 of the network 102. In one example, the profile is provided to one small scrubbing device (such as small scrubber 212) of the architecture 120. Further, the orchestrator 122 may execute one or more rules to determine which small scrubber 212-222 of the architecture 120 to provide the profile. In one instance, the determined small scrubber 212 to receive the profile may be based on a geographic location of the small scrubber 212 in relation to the destination device 110 to receive the scrubbed traffic. Providing the profile to a small scrubber 212 geographically near the destination device 110 may shorten the transmission path between the small scrubber 212 and the destination device 110 to reduce latency in the scrubbing process. In another example, the orchestrator 122 may provide the profile to a plurality of small scrubbers 212-222 of the architecture 120 such that any of the small scrubbers may provide the scrubbing service for the destination device 110.

In response to receiving the profile of the destination device 110 or network, the small scrubber 212 may announce, via a BGP session, one or more IP addresses associated with the destination device 110 or network. By announcing the IP addresses, the small scrubber 212 may begin receiving packets intended for the destination device 110, as described above. The transmission of the packets to the small scrubber 212 may occur regardless of a detected DDOS attack on the destination device 110. Rather, all traffic intended for the destination device 110 may be scrubbed by the small scrubber 212 as a precaution against undetected DDOS attacks. However, because the traffic intended for the destination device 110 during times of no DDOS attack may be small or known, the bandwidth of the small scrubber 212 may be less than scrubbing devices of other tiers of the scrubbing architecture 120. In other words, as input bandwidth to the scrubber may remain steady during periods outside of a DDOS attack, the input bandwidth to the small scrubber 212 may be less than during periods of a DDOS attack.

In instances where each small scrubber 212-222 receives the profile from the orchestrator 122, each receiving scrubber may announce the IP addresses identified in the profile. This may be an example of an Anycast address in which multiple devices of a network 102 announce the same IP addresses. In an Anycast network, the devices of the network may be configured to select the shortest possible routes between devices such that the small scrubber 212 that is closest geographically to the destination device 110 may receive the traffic intended for the destination device 110. Destination devices or networks located in other areas may receive traffic from other small scrubbers 214-222 of the architecture 120 that are closest geographically to the destination device 110.

The small scrubbers 212-222 of the architecture 120 may therefore provide "always on" scrubbing services for devices or networks connected to IP network 102. These small scrubbers 212-222 clean or otherwise respond to packets identified as attack packets such that the destination device or network do not receive the packet. The identification of attack packets and the mitigating response to the detection may be determined by the profile provided to the small scrubbers 212-222. At some point, a DDOS attack against a device or network associated with the IP network 102 may occur. To determine the occurrence of a DDOS attack, the small scrubbers 212-222 or other network devices may provide traffic data to the orchestrator 122 in operation 404. The traffic data may include volume or bandwidth of the traffic intended for the destination device 110 or networks connected to the IP network 102. Other traffic or network metrics may also be provided to the orchestrator 122 from other network sources from which the orchestrator 122 may determine if a DDOS attack is occurring.

In operation 406, the orchestrator 122 may determine if a DDOS attack is occurring to a destination device 110 associated with the IP network 102. In one example, this determination may be based on traffic data, such as an increase in traffic bandwidth for the destination device 110 above a threshold value of traffic flow to the destination device 110 may cause the orchestrator 122 to determine that a DDOS attack is occurring. For example, traffic for the destination device 110 exceeding 500 MB/second may indicate a DDOS attack. Other threshold values may also be considered, such as duration of the traffic exceeding the threshold, rate of change in traffic, percentage increase from a baseline data rate for the destination, etc. In addition, threshold values may vary from destination to destination, such as being one value for a first destination device 110 and a second value for a network connected to the IP network 102. Regardless of the network data utilized to determine a DDOS attack may be occurring, the orchestrator 122 may return to operation 404 and continue to access or receive network data when a DDOS attack is not occurring. The small scrubber 212 may continue to scrub the destination device 110 traffic during this period.

If the orchestrator 122 determines that a DDOS attack may be occurring based on the network data, the orchestrator 122 may, in operation 408, identify the IP addresses associated with the detected attack. For example, a network under attack may include several IP addresses, either in a contiguous range or in an non-contiguous range. The orchestrator 122 may, based on an analysis of the network data, determine which IP addresses may be under attack. This determination may be made based on which destination IP addresses have an increase in traffic that exceeds the threshold value discussed above. The data received from the small scrubbers 212-222 may thus include the destination IP address for received packets such that the orchestrator 122 may identify the metrics for the various incoming communication packets.

In operation 410, the orchestrator 122 may distribute the scrubbing profile associated with the attacked IP addresses to a large scrubber 206-210 or other tier of the scrubbing architecture 120. As above, the large scrubber 206 may announce, in a BGP session or other address announcement, the attacked IP addresses of the destination device 110 to begin receiving the traffic intended for the destination device 110. In addition, the orchestrator 122 may instruct one or more of the small scrubbers 212-222 to cease announcing the attacked IP addresses such that the small scrubbers 212-222 stop receiving the traffic for the destination device 110. In this manner, the traffic for the attacked IP addresses of the destination device 110 may be transferred from a small scrubber 212 to a large scrubber 206, as illustrated in Figure 2 as traffic during a detected attack may be scrubbed by large scrubber 206 and traffic during a period before or after the detected attack may be scrubbed by small scrubber 212. The large scrubber 206 may be configured with a larger input bandwidth than the small scrubber 212 to accommodate the large volume of incoming traffic for destination device 110 during a DDOS attack.

Although not illustrated herein, the scrubbing architecture 120 may include other tiers that correspond to other threshold values such that traffic for the destination device 110 may be transferred to a tier based on the threshold value associated with the tier. In this manner the traffic for the destination device 110 may move up the tiers of the architecture 120 to scrubbing devices with larger and larger input bandwidths to accommodate larger and larger incoming attacks. Further, in one instance, the large scrubbers 206-210 (or any other scrubber of the architecture 120) may be geographically located near known originations of DDOS attacks. For example, several DDOS attacks on the network 102 may originate from a particular network or country. A larger scrubber 206-210 may be located within the network 102 near the ingress of the origin of the DDOS attacks to minimize or otherwise shorten the route the attack packets take through the network 102. Placement of the large scrubbers 206-210 near the ingress points of the origin of the attack may therefore reduce the impact of the attack on the network 102 (by shortening the duration such packets are transmitted through the network 102) in addition to scrubbing the attack from reaching the destination device 110.

Analyzing the traffic for packets intended for the destination device 110 or destination network may therefore cause the traffic to be redirected from the small scrubber 212 to the large scrubber 206. As the bandwidth requirement to handle incoming traffic during a DDOS attack may be larger than periods when an attack is not occurring, the large scrubber 206 may be configured with a larger input bandwidth than the input bandwidth of the small scrubber 212. The large scrubber 206 may also include other performance capabilities (such as larger memory and processing capabilities) that improve the scrubbing performance of the large scrubber 206 in comparison to the small scrubber 212. Further, the redirection of the incoming traffic for the destination device 110 from the small scrubber 212 to the large scrubber 206 may occur in response to a network performance metric associated with the incoming traffic stream, such as a bandwidth threshold value measured in bytes per second. Thus, as the flow of traffic to the destination device 110 increases due to a DDOS attack on the destination device, the scrubbing services may transition from the small scrubber 212 to the large scrubber 206 to ensure that the scrubbing services is not overwhelmed by the increase in incoming traffic. Multiple tiers of scrubbers may be included in the scrubbing architecture 120 to accommodate various threshold levels of incoming traffic to the destination device 100 or network.

In operation 412, the orchestrator 122 may continue to monitor the traffic intended for the destination device 110 or network. As above, the network data associated with the destination device 110 may be received from the scrubbers of the scrubbing architecture 120 or from another source of the network 102 configured to provide traffic data to the orchestrator 122. In operation 414, the orchestrator 122 may determine if the DDOS attack on the destination device 110 is continuing or has ended. In one instance, the orchestrator 122 may determine that the DDOS attack as ended when the traffic for the destination device 110 has dropped below the threshold value that triggered transferring the traffic to the large scrubber 206. In another instance, the threshold value of the network metric for determining the DDOS attack has ended may be different than the threshold value for determining a DDOS attack has started. Regardless of the threshold value used, the orchestrator 122 may return to operation 412 to monitor the traffic intended for the destination device 110 during the occurrence of the DDOS attack.

When the orchestrator 122 determines that the DDOS attack has ended or the traffic intended for the destination device 110 has otherwise dropped below a network metric threshold value, the orchestrator 122 may distribute the scrubbing profile associated with the attacked IP addresses to the small scrubber 212 or other tier of the scrubbing architecture 120. As above, the small scrubber 212 may again announce, in a BGP session or other address announcement, the IP addresses of the destination device 110 to receive the traffic intended for the destination device 110. In addition, the orchestrator 122 may instruct one or more of the large scrubbers 206-210 to cease announcing the attacked IP addresses of the destination device 110 such that the large scrubbers 206-210 stop receiving the traffic for the destination device 110. In this manner, the traffic for the IP addresses of the destination device 110 may be returned to the small scrubbers 212-222 of the architecture 120 for scrubbing by the small scrubbers 212-222.

Through the method 400 described above, traffic intended for the destination device 110 may be scrubbed by a small scrubbing device 212-222 during periods of normal operation or before or after a DDOS attack on the device 110. However, during a detected DDOS attack, traffic for the destination device 110 may be transferred to the large scrubber 206-210 with a relatively larger input bandwidth and or other performance capabilities. The large scrubber 206-210 may scrub the incoming packets during the DDOS attack for the destination device 110 or network. After the attack has ceased, the traffic may return to being scrubbed by the small scrubber 212-222. In a similar manner, other tiers of scrubbing devices may be included in the scrubbing architecture 120 to provide a scalable and versatile scrubbing environment for the network 102 to provide scrubbing services to devices and/or networks connected to the network.

In another example, a small scrubbing device 212-222 may provide scrubbing services for multiple destination devices 110 hosted by the VPN 322 or any other networks in communication with the clean router 304. A DDOS attack may occur on more than one of the multiple destination devices simultaneously. Each of the DDOS attacks may not be enough to trigger escalation to the large scrubbers 206-210. Thus, in some implementations, the small scrubbing devices 212-222 may be configured to analyze traffic intended for multiple destination devices 110 to determine a DDOS attack on the multiple devices. Upon detection of an attack on the multiple destination devices, the small scrubbing devices 212-222 may transfer the traffic for the devices under attack to the large scrubbers 206-210 as described above. Thus, in this example, traffic intended for multiple destination devices may be analyzed to detect a possible DDOS attack on the network.

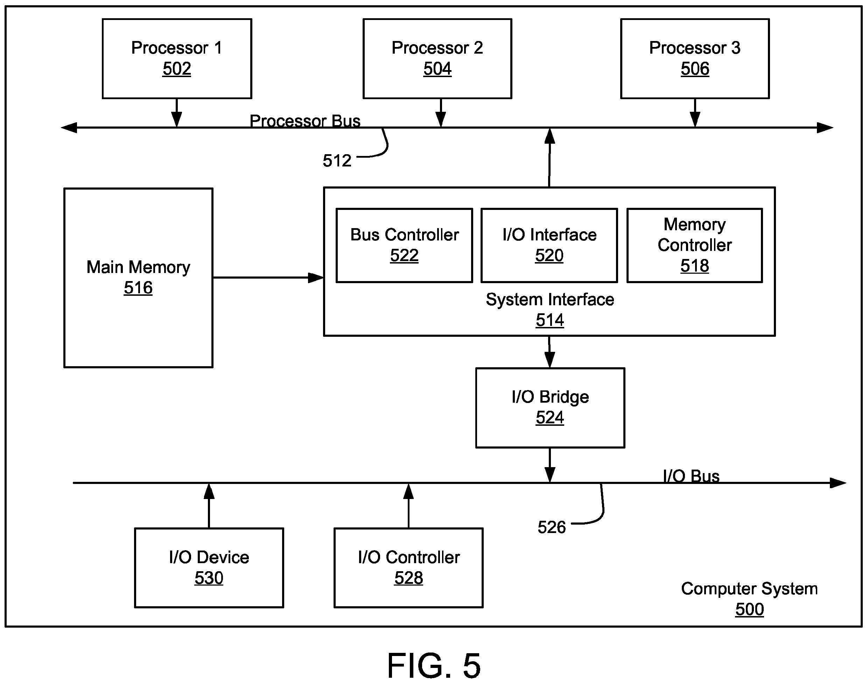

Figure 5 is a block diagram illustrating an example of a computing device or computer system 500 which may be used in implementing the embodiments of the components of the network disclosed above. For example, the computing system 500 of Figure 5 may be the orchestrator 122 discussed above. The computer system (system) includes one or more processors 502-506. Processors 502-506 may include one or more internal levels of cache (not shown) and a bus controller or bus interface unit to direct interaction with the processor bus 512. Processor bus 512, also known as the host bus or the front side bus, may be used to couple the processors 502-506 with the system interface 514. System interface 514 may be connected to the processor bus 512 to interface other components of the system 500 with the processor bus 512. For example, system interface 514 may include a memory controller 514 for interfacing a main memory 516 with the processor bus 512. The main memory 516 typically includes one or more memory cards and a control circuit (not shown). System interface 514 may also include an input/output (I/O) interface 520 to interface one or more I/O bridges or I/O devices with the processor bus 512. One or more I/O controllers and/or I/O devices may be connected with the I/O bus 526, such as I/O controller 528 and I/O device 530, as illustrated.

I/O device 530 may also include an input device (not shown), such as an alphanumeric input device, including alphanumeric and other keys for communicating information and/or command selections to the processors 502-506. Another type of user input device includes cursor control, such as a mouse, a trackball, or cursor direction keys for communicating direction information and command selections to the processors 502-506 and for controlling cursor movement on the display device.

System 500 may include a dynamic storage device, referred to as main memory 516, or a random access memory (RAM) or other computer-readable devices coupled to the processor bus 512 for storing information and instructions to be executed by the processors 502-506. Main memory 516 also may be used for storing temporary variables or other intermediate information during execution of instructions by the processors 502-506. System 500 may include a read only memory (ROM) and/or other static storage device coupled to the processor bus 512 for storing static information and instructions for the processors 502-506. The system set forth in Figure 5 is but one possible example of a computer system that may employ or be configured in accordance with aspects of the present disclosure.

According to one embodiment, the above techniques may be performed by computer system 500 in response to processor 504 executing one or more sequences of one or more instructions contained in main memory 516. These instructions may be read into main memory 516 from another machine-readable medium, such as a storage device. Execution of the sequences of instructions contained in main memory 516 may cause processors 502-506 to perform the process steps described herein. In alternative embodiments, circuitry may be used in place of or in combination with the software instructions. Thus, embodiments of the present disclosure may include both hardware and software components.

A machine readable medium includes any mechanism for storing or transmitting information in a form (e.g., software, processing application) readable by a machine (e.g., a computer). Such media may take the form of, but is not limited to, non-volatile media and volatile media and may include removable data storage media, non-removable data storage media, and/or external storage devices made available via a wired or wireless network architecture with such computer program products, including one or more database management products, web server products, application server products, and/or other additional software components. Examples of removable data storage media include Compact Disc Read-Only Memory (CD-ROM), Digital Versatile Disc Read-Only Memory (DVD-ROM), magneto-optical disks, flash drives, and the like. Examples of non-removable data storage media include internal magnetic hard disks, SSDs, and the like. The one or more memory devices 606 may include volatile memory (e.g., dynamic random access memory (DRAM), static random access memory (SRAM), etc.) and/or non-volatile memory (e.g., read-only memory (ROM), flash memory, etc.).

The description above includes example systems, methods, techniques, instruction sequences, and/or computer program products that embody techniques of the present disclosure. However, it is understood that the described disclosure may be practiced without these specific details. In the present disclosure, the methods disclosed may be implemented as sets of instructions or software readable by a device. Further, it is understood that the specific order or hierarchy of steps in the methods disclosed are instances of example approaches. Based upon design preferences, it is understood that the specific order or hierarchy of steps in the method can be rearranged while remaining within the disclosed subject matter. The accompanying method claims present elements of the various steps in a sample order, and are not necessarily meant to be limited to the specific order or hierarchy presented.

It is believed that the present disclosure and many of its attendant advantages should be understood by the foregoing description, and it should be apparent that various changes may be made in the form, construction, and arrangement of the components without departing from the disclosed subject matter or without sacrificing all of its material advantages. The form described is merely explanatory, and it is the intention of the following claims to encompass and include such changes.

While the present disclosure has been described with reference to various embodiments, it should be understood that these embodiments are illustrative and that the scope of the disclosure is not limited to them. Many variations, modifications, additions, and improvements are possible. More generally, embodiments in accordance with the present disclosure have been described in the context of particular implementations. Functionality may be separated or combined in blocks differently in various embodiments of the disclosure or described with different terminology. These and other variations, modifications, additions, and improvements may fall within the scope of the disclosure as defined in the claims that follow.

## Claims

1. A method for providing a scrubbing service from a network (102), the method comprising:
receiving (402), from an orchestrator of the network and at one of a plurality of scrubbing devices (212, 214, 216, 218, 220, 222) of a scrubbing environment (120), a scrubbing profile associated with a device (110) of a telecommunications network, the scrubbing profile comprising an Internet Protocol, IP, address associated with the device;
in response to receiving the scrubbing profile, announcing, by the one scrubbing device via a Border Gateway Protocol, BGP, announcement session, the IP address associated with the device;
determining (406), by the orchestrator, that each of a plurality of denial of service attacks is occurring on the device and whether each said determined attack is larger than a threshold value associated with the one scrubbing device, and
in response to each said determination that an attack is occurring while a said one scrubbing device is instructed to perform said announcing and that the attack is larger than the threshold value associated with that one scrubbing device:
transmitting (410) by the orchestrator, to another of the plurality of scrubbing devices (206, 208, 210) of the scrubbing environment, the scrubbing profile for the device (110) of the telecommunications network;
instructing (410), by the orchestrator, the one scrubbing device that is instructed to perform the announcing to cease announcing the IP address associated with the device; and
announcing, by the another scrubbing device, the scrubbing profile transmitted by the orchestrator, the announcement through a second routing protocol announcement session,
wherein the another scrubbing device comprises a larger input bandwidth than the one scrubbing device instructed to cease announcing.

2. The method of claim 1 further comprising:
obtaining by the orchestrator, from a database (306), the scrubbing profile, retaining some aspects of the scrubbing profile, and providing other aspects of the scrubbing profile to the one scrubbing device.

3. The method of claim 1 wherein the scrubbing environment comprises a scrubbing controller (316) and a plurality of scrubbing servers (206, 212, 214), the scrubbing controller providing scrubbing instructions to the plurality of scrubbing servers to provide the traffic scrubbing services to the customer of the telecommunications network.

4. An orchestrator device (122) of a scrubbing environment of a telecommunications network (102), the orchestrator device comprising:
a processing device configured to control the orchestrator device to perform the operations of:
transmit (402), to one of a plurality of scrubbing devices (212, 214, 216, 218, 220, 222) of the scrubbing environment (120), a scrubbing profile associated with a device, the scrubbing profile comprising an Internet Protocol, IP, address associated with the device, instructing the one scrubbing device to perform announcing, via a Border Gateway Protocol, BGP, announcement session, of the IP address associated with the device;
determine (406), that each of a plurality of denial of service attacks is occurring on the device and if each said determined attack is larger than a threshold value associated with the one scrubbing device; and
in response to each said determination that an attack is occurring while a said one scrubbing device is instructed to perform said announcing and that the attack is larger than a threshold value associated with that one scrubbing device:
transmit (410), to another of the plurality of scrubbing devices (206, 208, 210) of the scrubbing environment, the scrubbing profile for the device (110) of the telecommunications network via the second communication port; andinstruct (410) the one scrubbing device that is instructed to perform the announcing to cease announcing the IP address associated with the device;
wherein each another scrubbing device comprises a larger input bandwidth than the one scrubbing device.

5. The orchestrator of claim 4 wherein the scrubbing environment comprises a scrubbing controller and a plurality of scrubbing servers, the scrubbing controller providing scrubbing instructions to the plurality of scrubbing servers to provide the traffic scrubbing services to the customer of the telecommunications network.

## Patentansprüche

1. Verfahren zum Bereitstellen eines Scrubbing-Dienstes von einem Netzwerk (102), wobei das Verfahren Folgendes umfasst:
Empfangen (402) eines Scrubbing-Profils, das einer Vorrichtung (110) eines Telekommunikationsnetzwerks zugeordnet ist, von einem Orchestrator des Netzwerks und an einer aus einer Vielzahl von Scrubbing-Vorrichtungen (212, 214, 216, 218, 220, 222) einer Scrubbing-Umgebung (120), wobei das Scrubbing-Profil eine Internet-Protokoll-(IP-)Adresse umfasst, die der Vorrichtung zugeordnet ist;
als Antwort auf das Empfangen des Scrubbing-Profils erfolgendes Bekanntgeben der IP-Adresse, die der Vorrichtung zugeordnet ist, durch die eine Scrubbing-Vorrichtung über eine Border-Gateway-Protocol-(BGP-)Bekanntgabesitzung;
Bestimmen (406), durch den Orchestrator, dass jeder aus einer Vielzahl von Denial-of-Service-Angriffen auf der Vorrichtung stattfindet und ob jeder bestimmte Angriff größer als ein Schwellenwert ist, welcher der einen Scrubbing-Vorrichtung zugeordnet ist, und
als Antwort auf jede Bestimmung, dass ein Angriff stattfindet, während eine Scrubbing-Vorrichtung angewiesen ist, das Bekanntgeben durchzuführen, und dass der Angriff größer als der Schwellenwert ist, der dieser einen Scrubbing-Vorrichtung zugeordnet ist:
Übertragen (410) des Scrubbing-Profils für die Vorrichtung (110) des Telekommunikationsnetzwerks durch den Orchestrator an eine andere aus der Vielzahl von Scrubbing-Vorrichtungen (206, 208, 210) der Scrubbing-Umgebung;
Anweisen (410) der einen Scrubbing-Vorrichtung, die angewiesen ist, das Bekanntgeben durchzuführen, durch den Orchestrator, das Bekanntgeben der IP-Adresse, die der Vorrichtung zugeordnet ist, einzustellen; und
Bekanntgeben des durch den Orchestrator übertragenen Scrubbing-Profils durch die andere Scrubbing-Vorrichtung, wobei die Bekanntgabe durch eine zweite Routing-Protokoll-Bekanntgabesitzung erfolgt,
wobei die andere Scrubbing-Vorrichtung eine größere Eingangsbandbreite umfasst als die eine Scrubbing-Vorrichtung, die angewiesen ist, das Bekanntgeben einzustellen.

2. Verfahren nach Anspruch 1, ferner Folgendes umfassend:
Erlangen des Scrubbing-Profils durch den Orchestrator aus einer Datenbank (306), Beibehalten einiger Aspekte des Scrubbing-Profils, und Bereitstellen anderer Aspekte des Scrubbing-Profils für die eine Scrubbing-Vorrichtung.

3. Verfahren nach Anspruch 1, wobei die Scrubbing-Umgebung einen Scrubbing-Controller (316) und eine Vielzahl von Scrubbing-Servern (206, 212, 214) umfasst, wobei der Scrubbing-Controller Scrubbing-Anweisungen für die Vielzahl von Scrubbing-Servern bereitstellt, um dem Kunden des Telekommunikationsnetzwerks die Dienste zum Scrubbing von Datenverkehr bereitzustellen.

4. Orchestratorvorrichtung (122) einer Scrubbing-Umgebung eines Telekommunikationsnetzwerks (102), wobei die Orchestratorvorrichtung Folgendes umfasst:
eine Verarbeitungsvorrichtung, die dafür konfiguriert ist, die Orchestratorvorrichtung zu steuern, um die folgenden Operationen durchzuführen:
Übertragen (402) eines Scrubbing-Profils, das einer Vorrichtung zugeordnet ist, wobei das Scrubbing-Profil eine Internet-Protokoll-(IP-)Adresse umfasst, die der Vorrichtung zugeordnet ist, an eine aus einer Vielzahl von Scrubbing-Vorrichtungen (212, 214, 216, 218, 220, 222) der Scrubbing-Umgebung (120), was die eine Scrubbing-Vorrichtung anweist, das Bekanntgeben der IP-Adresse, die der Vorrichtung zugeordnet ist, über eine Border-Gateway-Protocol-(BGP-)Bekanntgabesitzung durchzuführen;
Bestimmen (406), dass jeder aus einer Vielzahl von Denial-of-Service-Angriffen auf der Vorrichtung stattfindet und falls jeder bestimmte Angriff größer als ein Schwellenwert ist, welcher der einen Scrubbing-Vorrichtung zugeordnet ist, und
als Antwort auf jede Bestimmung, dass ein Angriff stattfindet, während eine Scrubbing-Vorrichtung angewiesen ist, das Bekanntgeben durchzuführen, und dass der Angriff größer als ein Schwellenwert ist, der dieser einen Scrubbing-Vorrichtung zugeordnet ist:
Übertragen (410) des Scrubbing-Profils für die Vorrichtung (110) des Telekommunikationsnetzwerks an eine andere aus der Vielzahl von Scrubbing-Vorrichtungen (206, 208, 210) der Scrubbing-Umgebung über den zweiten Kommunikationsport; und
Anweisen (410) der einen Scrubbing-Vorrichtung, die angewiesen ist, das Bekanntgeben durchzuführen, das Bekanntgeben der IP-Adresse, die der Vorrichtung zugeordnet ist, einzustellen;
wobei jede andere Scrubbing-Vorrichtung eine größere Eingangsbandbreite umfasst als die eine Scrubbing-Vorrichtung.

5. Orchestrator nach Anspruch 4, wobei die Scrubbing-Umgebung einen Scrubbing-Controller und eine Vielzahl von Scrubbing-Servern umfasst, wobei der Scrubbing-Controller Scrubbing-Anweisungen für die Vielzahl von Scrubbing-Servern bereitstellt, um dem Kunden des Telekommunikationsnetzwerks die Dienste zum Scrubbing von Datenverkehr bereitzustellen.

## Revendications

1. Procédé pour fournir un service de nettoyage depuis un réseau (102), le procédé comprenant :
la réception (402), en provenance d'un orchestrateur du réseau et au niveau de l'un d'une pluralité de dispositifs de nettoyage (212, 214, 216, 218, 220, 222) d'un environnement de nettoyage (120), d'un profil de nettoyage associé à un dispositif (110) d'un réseau de télécommunication, le profil de nettoyage comprenant une adresse de protocole Internet, IP, associée au dispositif ;
en réponse à la réception du profil de nettoyage, l'annonce, par le dispositif de nettoyage en question *via* une session d'annonce de protocole de passerelle frontière, BGP, de l'adresse IP associée au dispositif ;
la détermination (406), par l'orchestrateur, du fait que chacune d'une pluralité d'attaques par déni de service est en cours de survenue sur le dispositif et de si chaque dite attaque déterminée est plus grande ou non qu'une valeur de seuil associée au dispositif de nettoyage en question ; et
en réponse à chaque dite détermination du fait qu'une attaque est en cours de survenue tandis qu'un dit dispositif de nettoyage en question se voit demander de réaliser ladite annonce et que l'attaque est plus grande que la valeur de seuil associée à ce dispositif de nettoyage en question :
l'émission (410) par l'orchestrateur, sur un autre de la pluralité de dispositifs de nettoyage (206, 208, 210) de l'environnement de nettoyage, du profil de nettoyage pour le dispositif (110) du réseau de télécommunication ;
la demande (410), par l'orchestrateur, au dispositif de nettoyage en question qui se voit demander de réaliser l'annonce, de cesser l'annonce de l'adresse IP associée au dispositif ; et
le fait d'annoncer, par l'autre dispositif de nettoyage, du profil de nettoyage émis par l'orchestrateur, l'annonce ayant lieu par l'intermédiaire d'une seconde session d'annonce de protocole de routage,
dans lequel ledit autre dispositif de nettoyage comprend une bande passante d'entrée plus grande que le dispositif de nettoyage en question qui se voit demander de cesser l'annonce.

2. Procédé selon la revendication 1, comprenant en outre :
l'obtention par l'orchestrateur, à partir d'une base de données (306), du profil de nettoyage, la retenue de certains aspects du profil de nettoyage, et la fourniture d'autres aspects du profil de nettoyage au dispositif de nettoyage en question.

3. Procédé selon la revendication 1, dans lequel l'environnement de nettoyage comprend un contrôleur de nettoyage (316) et une pluralité de serveurs de nettoyage (206, 212, 214), le contrôleur de nettoyage fournissant des instructions de nettoyage à la pluralité de serveurs de nettoyage pour fournir les services de nettoyage de trafic au client du réseau de télécommunication.

4. Dispositif d'orchestrateur (122) d'un environnement de nettoyage d'un réseau de télécommunications (102), le dispositif d'orchestrateur comprenant :
un dispositif de traitement configuré pour commander le dispositif d'orchestrateur pour réaliser les opérations suivantes :
l'émission (402), sur l'un d'une pluralité de dispositifs de nettoyage (212, 214, 216, 218, 220, 222) de l'environnement de nettoyage (120), d'un profil de nettoyage associé à un dispositif, le profil de nettoyage comprenant une adresse de protocole Internet, IP, associée au dispositif, ce qui demande au dispositif de nettoyage en question de réaliser l'annonce *via* une session d'annonce de protocole de passerelle frontière, BGP, de l'adresse IP associée au dispositif;
la détermination (406) du fait que chacune d'une pluralité d'attaques par déni de service est en cours de survenue sur le dispositif et de si chaque dite attaque déterminée est plus grande qu'une valeur de seuil associée au dispositif de nettoyage en question ; et
en réponse à chaque dite détermination du fait qu'une attaque est en cours de survenue tandis qu'un dit dispositif de nettoyage en question se voit demander de réaliser ladite annonce et que l'attaque est plus grande qu'une valeur de seuil associée à ce dispositif de nettoyage en question :
l'émission (410), sur un autre de la pluralité de dispositifs de nettoyage (206, 208, 210) de l'environnement de nettoyage, du profil de nettoyage pour le dispositif (110) du réseau de télécommunication *via* le second port de communication ; et
la demande (410) au dispositif de nettoyage en question qui se voit demander de réaliser l'annonce, de cesser l'annonce de l'adresse IP associée au dispositif ;
dans lequel chaque autre dispositif de nettoyage comprend une bande passante d'entrée plus grande que le dispositif de nettoyage en question.

5. Orchestrateur selon la revendication 4, dans lequel l'environnement de nettoyage comprend un contrôleur de nettoyage et une pluralité de serveurs de nettoyage, le contrôleur de nettoyage fournissant des instructions de nettoyage à la pluralité de serveurs de nettoyage pour fournir les services de nettoyage de trafic au client du réseau de télécommunication.
